# EUROPÄISCHE PATENTANMELDUNG

(11) **EP 1 967 352 A1**
(43) Veröffentlichungstag der Anmeldung: **10.09.2008**
(21) Anmeldenummer: 08001876.5
(22) Anmeldetag: 01.02.2008
(51) Int. Cl.: B29C 51/14, B60R 13/02, B32B 37/10, B32B 38/12

(54) **Fahrzeugausstattungsteil und Verfahren**

(30) Priorität: 09.03.2007 DE 102007011936
(71) Anmelder: Johnson Controls Interiors GmbH & Co. KG, 47929 Grefrath (DE)
(72) Erfinder: Claren, Lars, 40764 Langenfeld (DE); Kuckertz, Martin, 40547 Düsseldorf (DE); Leer, Britta, 40597 Düsseldorf (DE)
(74) Vertreter: Hemmelmann, Klaus

(57) **Zusammenfassung**

Die Erfindung bezieht sich auf ein Fahrzeugausstattungsteil, insbesondere für den Innenraum eines Kraftfahrzeugs, mit einem luftdurchlässig ausgebildeten, flächigen Trägermaterial 1, das eine zur späteren Verarbeitung im Tiefziehprozess geeignete Festigkeit und Dehnfähigkeit aufweist, und mit einer lichtdurchlässigen, luftdichten Folie 4. Es ist dabei erfindungsgemäß vorgesehen, dass das Trägermaterial 1 und die ebenfalls eine zur weiteren Verarbeitung im Tiefziehprozess geeignete Dehnfähigkeit aufweisende Folie 4 als durch Tiefziehen gebildete Verbundeinheit ausgebildet sind, wobei der Verbund im wesentlichen durch unmittelbaren Stoffschluss zwischen Trägermaterial 1 und Folie 4 erfolgt. Die Erfindung bezieht sich außerdem auf ein Verfahren zur Herstellung eines derartigen Fahrzeugausstattungsteiles, insbesondere für den Innenraum eines Kraftfahrzeugs.

## Beschreibung

Die Erfindung betrifft ein Fahrzeugausstattungsteil, insbesondere für den Innenraum eines Kraftfahrzeugs, mit einem luftdurchlässig ausgebildeten, flächigen Trägermaterial, das eine zur späteren Verarbeitung im Tiefziehprozess geeignete Festigkeit und Dehnfähigkeit aufweist, und mit einer lichtdurchlässigen, luftdichten Folie. Die Erfindung betrifft außerdem ein Verfahren zur Herstellung eines Fahrzeugausstattungsteiles, insbesondere für den Innenraum eines Kraftfahrzeugs, durch Verbinden eines luftdurchlässig ausgebildeten, flächigen Trägermaterials, das eine zur späteren Verarbeitung im Tiefziehprozess geeignete Festigkeit und Dehnfähigkeit aufweist, mit einer lichtdurchlässigen, luftdichten Folie.

### Stand der Technik

Es sind aus dem Stand der Technik mehrere Fahrzeugausstattungsteile und Verfahren der gattungsgemäßen Art bekannt, es sei dazu auf folgende Druckschriften verwiesen:

Die DE 102 44 709 A1 bezieht sich auf ein Ausstattungsteil, insbesondere ein Verkleidungsteil für den Innenraum eines Kraftfahrzeuges, mit einem Träger und mindestens einer mit diesem verbundene Dekorschicht aus Naturwerkstoff. Es besteht dabei der Träger aus in eine Matrix eingebetteten Naturfasern. Die Dekorschicht kann entweder aus einem gegebenenfalls örtlich mit Schnitten versehenen Flächengebilde oder, nach einer besonders bevorzugten Ausführung, aus nach dem Verpressen mit dem Halbzeug des Trägers agglomerierten Partikeln bestehen. Diese Durckschrift betrifft ferner ein Verfahren zur Herstellung derartiger Ausstattungsteile.

Die DE 44 47 645 C2 betrifft ein Verfahren zur Herstellung eines Formteiles, insbesondere einer Innenverkleidung oder dergleichen für Kraftfahrzeuge, hergestellt aus einer mit einem thermoplastischen Harz vorimprägnierten Vliesmatte, bei dem die Vliesmatte über die Erweichungstemperatur des thermoplastischen Harzes hinaus in einer Kontaktheizpresse flächig erwärmt und vorverdichtet und diese Vliesmatte unter hohem Druck und einer Temperatur von 100-130 °C in einer Heißdruckform verpreßt wird und das verpreßte Formteil in mindestens einer Kühlstufe gekühlt wird, wobei in dieser mindestens einen Kühlstufe zumindest ein Kontaktdruck zwischen der Kühlform und dem geformten Teil aufrechterhalten wird, wobei auf das verpreßte Formteil eine Folie oder sonstiges Dekormaterial aufkaschiert wird, indem die Folie oder sonstiges Dekormaterial sowie die zu kaschierende Oberfläche des Formteiles durch Kontaktwärme erhitzt und unter geringem Druck aneinandergelegt werden, woraufhin das mit der Kaschierfolie oder sonstigem Dekormaterial versehene verpreßte Formteil abgekühlt wird.

Die DE 10 2004 040 961 A1 bezieht sich auf ein Verfahren zur Herstellung eines dreidimensionalen Formteiles, Vorrichtung zur Durchführung des Verfahrens und Formteil. Es wird dabei wird ein Verbundflächengebilde aus einem Designflächengebilde und einem tiefziehfähigen Schutzflächengebilde stoffschlüssig auf ein ebenes Trägergebilde ausgebracht und die so gebildete Verbundeinheit wird zu einem Verbundformteil tiefgezogen.

Die 43 13 911 A1 betrifft einen geformten Schichtkörper, insbesondere ein Innenauskleidungsteil für Kraftfahrzeuge. Der Schichtkörper weist eine im wesentlichen steife Trägerfolie aus thermoplastischem Material auf. Diese ist mindestens einseitig, vorzugsweise beidseitig, mit einem Oberflächenbelag in Form eines Faservlieses belegt. Dabei ist die Verbindung zwischen dem Faservlies und der Kunststofffolie eine thermische Verklebung. Zur Ausbildung der Verklebung besteht das Faservlies mindestens zum Teil, vorzugsweise vollständig, aus einem artgleichen Kunststoff wie die Folie. Diese Druckschrift betrifft auch ein Verfahren und eine Vorrichtung zur Herstellung des Schichtkörpers. Zur Ausbildung der Klebeverbindung wird die Folie auf mindestens einer Seite auf eine Temperatur im Klebebereich des thermoplastischen Kunststoffes aufgeheizt, wobei das Folieninnere auf einem niedrigerem Temperaturniveau gehalten wird. Durch diese Vorgehensweise wird beim Klebe- und Formungsvorgang die Struktur des Faservlies geschont. Durch diese Ausbildung lassen sich in einfacher Weise sortenreine Schichtkörper herstellen, so dass sie als Ganzes leicht wieder recycelbar sind wie auch die bei ihrer Herstellung anfallenden Abfallstücke.

### Aufgabe

Der Erfindung liegt die Aufgabe zugrunde, ein optisch ansprechendes, gegebenenfalls auch durchleuchtbares Ausstattungsteil mit hoher Oberflächenfestigkeit und ein entsprechendes Verfahren zur Herstellung desselben bereitzustellen. Die Erfindung geht dabei insbesondere aus von einem Ausstattungsteil und Verfahren nach DE 102 44 709 A1.

### Lösung

Die Aufgabe wird bezüglich des Ausstattungsteiles erfindungsgemäß dadurch gelöst, dass das Trägermaterial und die ebenfalls eine zur weiteren Verarbeitung im Tiefziehprozess geeignete Dehnfähigkeit aufweisende Folie als durch Tiefziehen gebildete Verbundeinheit ausgebildet sind, wobei der Verbund im wesentlichen durch unmittelbaren Stoffschluss zwischen Trägermaterial und Folie erfolgt. Auf diese Weise wird mit einfachen Mitteln ein optisch ansprechendes, gegebenenfalls auch durchleuchtbares Ausstattungsteil mit hoher Oberflächenfestigkeit bereitgestellt.

Bei der bevorzugten Ausführungsform der vorliegenden Erfindung ist das flächige Trägermaterial als textiles Flächengebilde ausgebildet, wobei dieses bevorzugt aus Vliesmaterial, z.B. Polyester, besteht.

Nach einem weiteren Ausgestaltungsmerkmal der vorliegenden Erfindung ist vorgesehen, dass das flächige Trägermaterial dekorativen Charakter besitzt, es kann dabei beispielsweise aus Reispapier bestehen. Dabei empfiehlt es sich, dass das flächige Trägermaterial aufgebrachte, insbesondere aufgestreute Dekorpartikel umfasst, zweckmäßig umfasst dabei das flächige Trägermaterial locker verteilt aufgebrachte, den Lichtdurchtritt durch das Trägermaterial nicht vollständig verhindernde Dekorpartikel.

Es empfiehlt sich nach einem weiteren Merkmal der vorliegenden Erfindung, dass das flächige Trägermaterial eine Kleberschicht zum Anhaften der Dekorpartikel umfasst, so dass ein Verlust oder Verlagern der Dekorpartikel beim späteren Handling des Trägermaterials vermieden oder verringert wird.

Nach einem weiteren Ausgestaltungsmerkmal der vorliegenden Erfindung ist vorgesehen, dass die Folie aus transparentem Polymethylmetacrylat (PMMA) oder Polycarbonat (PC) besteht.

Zweckmäßig ist es nach einem weiteren Ausgestaltungsmerkmal der vorliegenden Erfindung, dass die tiefgezogene Verbundeinheit aus Trägermaterial und Folie ein dreidimensionales Flächenteil bildet. Es ist dabei bevorzugt die Sichtseite des Flächenteiles mattiert ausgeführt.

Die Aufgabe wird bezüglich des Verfahrens erfindungsgemäß dadurch gelöst, dass das Trägermaterial und die ebenfalls eine zur weiteren Verarbeitung im Tiefziehprozess geeignete Dehnfähigkeit aufweisende Folie durch Tiefziehen zu einer Verbundeinheit verbunden werden, wobei der Verbund im wesentlichen durch unmittelbaren Stoffschluss zwischen Trägermaterial und Folie erfolgt.

Bei der bevorzugten Ausführungsform der vorliegenden Erfindung hinsichtlich des Verfahrens werden auf das Trägermaterial vor dem Tiefziehen Dekorpartikel aufgebracht, insbesondere aufgestreut, zweckmäßig werden dabei diese Dekorpartikel derart locker verteilt auf das Trägermaterial aufgebracht, dass der Lichtdurchtritt durch das Trägermaterial nicht vollständig verhindernd wird.

Es empfiehlt sich nach einem weiteren Merkmal der vorliegenden Erfindung, dass das Trägermaterial vor dem Tiefziehen mit einer Kleberschicht zum Anhaften der Dekorpartikel versehen wird, so dass ein Verlust oder Verlagern der Dekorpartikel beim späteren Handling des Trägermaterials vermieden oder verringert wird.

Nach einem weiteren Ausgestaltungsmerkmal der vorliegenden Erfindung ist vorgesehen, dass die Folie vor dem Tiefziehen zur Erzielung einer für die weitere Verarbeitung im Tiefziehprozess geeigneten Dehnfähigkeit erwärmt wird. Die Erwärmung der Folie vor dem Tiefziehen erfolgt dabei vorzugsweise durch IR-Strahlung.

Zweckmäßig ist es nach einem weiteren Ausgestaltungsmerkmal der vorliegenden Erfindung, dass das Trägermaterial und die Folie durch Tiefziehen zu einem dreidimensionalen Flächenteil verbunden werden. Es wird dabei bevorzugt die Sichtseite des Flächenteiles mattiert. Diese Mattierung kann dabei durch nachträgliches Strahlen mit Sand, Trockeneis oder dergleichen erzeugt werden, alternativ dazu kann die Mattierung der Sichtseite des Flächenteiles vor dem Tiefziehen erfolgen oder die Folie wird nach einem letzten Ausgestaltungsmerkmal der vorliegenden Erfindung durch Zugabe von Mattierungsmitteln insgesamt matt ausgebildet.

### Figuren

Die Erfindung ist in den Figuren der Zeichnung in einem Ausführungsbeispiel dargestellt. Die Figuren stellen dabei schematisch den Ablauf bei der Fertigung des Ausstattungsteils sowie das Ausstattungsteil schematisch und beispielhaft dar.

Es zeigen:
- Fig. 1: ein flächiges Trägermaterial für das erfindungsgemäße Fahrzeugaustattungsteil, das luftdurchlässig und beispielsweise als textiles Flächengebilde ausgebildet ist,
- Fig. 2: eine schematische Darstellung des Aufstreuens von Dekorpartikeln auf dieses Trägermaterial,
- Fig. 3: eine schematische Darstellung des parallelen Erwärmens einer Folie, in diesem Fall durch IR- Strahlung,
- Fig. 4: eine schematische Darstellung des Tiefziehens unter Anlage von Vakuum,
- Fig. 5: eine schematische Darstellung des aus dem Tiefziehwerkzeug entnommenen Flächenteils.

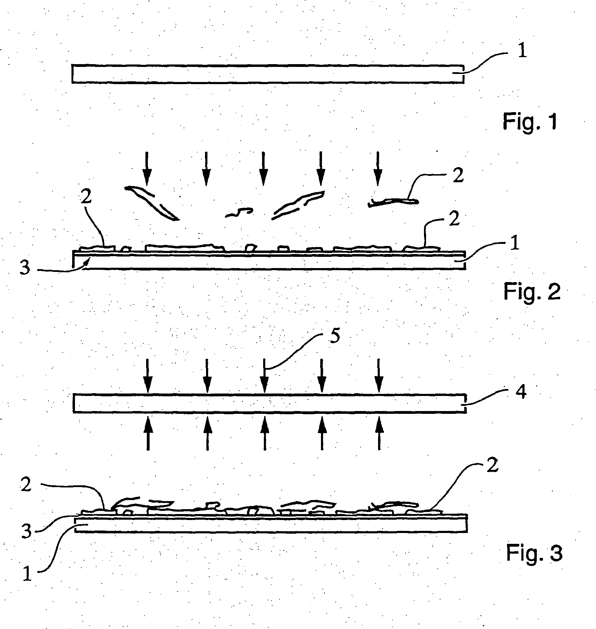

Fig. 1 zeigt ein flächiges Trägermaterial 1, das luftdurchlässig und beispielsweise als textiles Flächengebilde ausgebildet ist. Vorzugsweise wird hierzu ein Vliesmaterial, z. B. aus Polyester, eingesetzt. Das Trägermaterial 1 kann bereits einen dekorativen Charakter besitzen und auch aus Reispapier oder dergleichen bestehen, und weist eine zur späteren Verarbeitung im Tiefziehprozess geeignete Festigkeit und Dehnfähigkeit auf. Auf dieses Trägermaterial 1 werden vorzugsweise, aber nicht notwendigerweise, Dekorpartikel 2 aufgestreut (Fig. 2). Dekorpartikel 2 im Sinne dieser Erfindung können z. B. Gräser, Perlmutsplitter, Naturfasern, Mineralpartikel oder dergleichen sein, die vorzugsweise derart locker verteilt werden, dass sie den Lichtdurchtritt durch das Trägermaterial 1 nicht vollständig verhindern. Das Trägermaterial 1 kann vorab mit einer Kleberschicht 3 versehen werden, an welcher die Dekorpartikel 2 anhaften, so dass ein Verlust oder Verlagern der Dekorpartikel 2 beim späteren Handling des Trägermaterials 1 vermieden oder verringert wird.

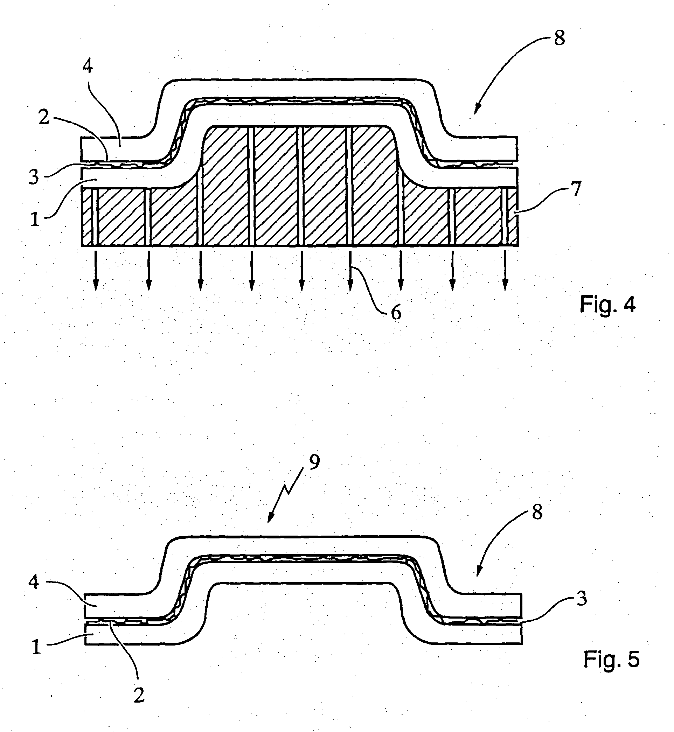

Wie in Fig. 3 dargestellt, wird in einem parallelen Arbeitsschritt eine lichtdurchlässige, aber luftdichte Folie 4, insbesondere aus transparentem Polymethylmetacrylat (PMMA) oder Polycarbonat (PC), erwärmt, vorzugsweise durch IR-Strahlung 5, bis auch diese eine für die weitere Verarbeitung im Tiefziehprozess geeignete Dehnbarkeit aufweist. Anschließend wird die Folie 4 auf das (ggf. bestreute) Trägermaterial 1 aufgelegt und durch Anlage von Vakuum 6 an das Trägermaterial 1 in einem Tiefziehwerkzeug 7 mit diesem verbunden und auf Wunsch zu einem dreidimensionalen Flächenteil 8 geformt (Fig. 4). Der Verbund erfolgt dabei im Wesentlichen durch unmittelbaren Stoffschluss zwischen Folie 4 und Trägermaterial 1.

Fig. 5 zeigt das aus dem Tiefziehwerkzeug entnommene Flächenteil 8, dessen Sichtseite 9 vorzugsweise mattiert ausgeführt ist. Die Mattierung kann durch nachträgliches Strahlen mit Sand, Trockeneis oder dergleichen erzeugt werden, wodurch auch eine markante Haptik entsteht. Es ist jedoch auch denkbar, die betreffende Flächenseite der Folie 4 vorab zu mattieren oder die Folie 4 durch Zugabe von Mattierungsmittein insgesamt matt auszubilden.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich.

### Bezugszeichen

- 1: Trägermaterial
- 2: Dekorpartikel
- 3: Kleberschicht
- 4: Folie
- 5: IR-Strahlung
- 6: Vakuum
- 7: Tiefziehwerkzeug
- 8: Flächenteil
- 9: Sichtseite

## Patentansprüche

1. Fahrzeugausstattungsteil, insbesondere für den Innenraum eines Kraftfahrzeugs, mit einem luftdurchlässig ausgebildeten, flächigen Trägermaterial (1), das eine zur späteren Verarbeitung im Tiefziehprozess geeignete Festigkeit und Dehnfähigkeit aufweist, und mit einer lichtdurchlässigen, luftdichten Folie (4),
**dadurch gekennzeichnet, dass**
das Trägermaterial (1) und die ebenfalls eine zur weiteren Verarbeitung im Tiefziehprozess geeignete Dehnfähigkeit aufweisende Folie (4) als durch Tiefziehen gebildete Verbundeinheit ausgebildet sind, wobei der Verbund im wesentlichen durch unmittelbaren Stoffschluss zwischen Trägermaterial (1) und Folie (4) erfolgt.

2. Fahrzeugausstattungsteil nach Anspruch 1,
**dadurch gekennzeichnet, dass**
das flächige Trägermaterial (1) als textiles Flächengebilde ausgebildet ist.

3. Fahrzeugausstattungsteil nach Anspruch 2,
**dadurch gekennzeichnet, dass**
das textile Flächengebilde aus Vliesmaterial, z.B. Polyester, besteht.

4. Fahrzeugausstattungsteil nach einem der Ansprüche 1 bis 3,
**dadurch gekennzeichnet, dass**
das flächige Trägermaterial (1) dekorativen Charakter besitzt.

5. Fahrzeugausstattungsteil nach einem der Ansprüche 1 bis 4,
**dadurch gekennzeichnet, dass**
das flächige Trägermaterial (1) aus Reispapier besteht.

6. Fahrzeugausstattungsteil nach einem der Ansprüche 1 bis 5,
**dadurch gekennzeichnet, dass**
das flächige Trägermaterial (1) aufgebrachte, insbesondere aufgestreute Dekorpartikel (2) umfasst.

7. Fahrzeugausstattungsteil nach Anspruch 6,
**dadurch gekennzeichnet, dass**
das flächige Trägermaterial (1) locker verteilt aufgebrachte, den Lichtdurchtritt durch das Trägermaterial (1) nicht vollständig verhindernde Dekorpartikel (2) umfasst.

8. Fahrzeugausstattungsteil nach einem der Ansprüche 1 bis 7,
**dadurch gekennzeichnet, dass**
das flächige Trägermaterial (1) eine Kleberschicht (3) zum Anhaften der Dekorpartikel (2) umfasst.

9. Fahrzeugausstattungsteil nach einem der Ansprüche 1 bis 8,
**dadurch gekennzeichnet, dass**
die Folie (4) aus transparentem Polymethylmetacrylat (PMMA) oder Polycarbonat (PC) besteht.

10. Fahrzeugausstattungsteil nach einem der Ansprüche 1 bis 9,
**dadurch gekennzeichnet, dass**
die tiefgezogene Verbundeinheit aus Trägermaterial (1) und Folie (4) ein dreidimensionales Flächenteil (8) bildet.

11. Fahrzeugausstattungsteil nach Anspruch 10,
**dadurch gekennzeichnet, dass**
die Sichtseite (9) des Flächenteiles (8) mattiert ausgeführt ist.

12. Verfahren zur Herstellung eines Fahrzeugausstattungsteiles, insbesondere für den Innenraum eines Kraftfahrzeugs, durch Verbinden eines luftdurchlässig ausgebildeten, flächigen Trägermaterials (1), das eine zur späteren Verarbeitung im Tiefziehprozess geeignete Festigkeit und Dehnfähigkeit aufweist, mit einer lichtdurchlässigen, luftdichten Folie (4),
**dadurch gekennzeichnet, dass**
das Trägermaterial (1) und die ebenfalls eine zur weiteren Verarbeitung im Tiefziehprozess geeignete Dehnfähigkeit aufweisende Folie (4) durch Tiefziehen zu einer Verbundeinheit verbunden werden, wobei der Verbund im wesentlichen durch unmittelbaren Stoffschluss zwischen Trägermaterial (1) und Folie (4) erfolgt.

13. Verfahren nach Anspruch 12,
**dadurch gekennzeichnet, dass**
auf das Trägermaterial (1) vor dem Tiefziehen Dekorpartikel (2) aufgebracht, insbesondere aufgestreut werden.

14. Verfahren nach Anspruch 13,
**dadurch gekennzeichnet, dass**
die Dekorpartikel (2) derart locker verteilt auf das Trägermaterial (1) aufgebracht werden, dass der Lichtdurchtritt durch das Trägermaterial (1) nicht vollständig verhindernd wird.

15. Verfahren nach einem der Ansprüche 12 bis 14,
**dadurch gekennzeichnet, dass**
das Trägermaterial (1) vor dem Tiefziehen mit einer Kleberschicht (3) zum Anhaften der Dekorpartikel (2) versehen wird.

16. Verfahren nach einem der Ansprüche 12 bis 15,
**dadurch gekennzeichnet, dass**
die Folie (4) vor dem Tiefziehen zur Erzielung einer für die weitere Verarbeitung im Tiefziehprozess geeigneten Dehnfähigkeit erwärmt wird.

17. Verfahren nach Anspruch 16,
**dadurch gekennzeichnet, dass**
die Erwärmung der Folie (4) vor dem Tiefziehen durch IR- Strahlung (5) erfolgt.

18. Verfahren nach einem der Ansprüche 12 bis 17,
**dadurch gekennzeichnet, dass**
das Trägermaterial (1) und Folie (4) durch Tiefziehen zu einem dreidimensionalen Flächenteil (8) verbunden werden.

19. Verfahren nach Anspruch 18,
**dadurch gekennzeichnet, dass**
die Sichtseite (9) des Flächenteiles (8) mattiert wird.

20. Verfahren nach Anspruch 19,
**dadurch gekennzeichnet, dass**
die Mattierung durch nachträgliches Strahlen mit Sand, Trockeneis oder dergleichen erzeugt wird.

21. Verfahren nach Anspruch 19,
**dadurch gekennzeichnet, dass**
die Mattierung der Sichtseite (9) des Flächenteiles (8) vor dem Tiefziehen erfolgt.

22. Verfahren nach Anspruch 19,
**dadurch gekennzeichnet, dass**
die Folie (4) durch Zugabe von Mattierungsmitteln insgesamt matt ausgebildet wird.
